# EUROPEAN PATENT SPECIFICATION

(11) **EP 3 112 143 B1**
(45) Date of publication and mention of the grant of the patent: **19.12.2018**
(21) Application number: 16174628.4
(22) Date of filing: 15.06.2016
(51) Int. Cl.: B29D 30/62, B29C 47/06, B29C 47/36, B29L 30/00, B29D 30/52

(54) **COMPOUND SWITCHING APPARATUS FOR FORMING TIRE COMPONENTS AND METHOD FOR FORMING A TIRE TREAD**
VERBINDUNGSSCHALTVORRICHTUNG ZUR HERSTELLUNG VON REIFENBESTANDTEILEN UND VERFAHREN ZUR HERSTELLUNG EINER REIFENLAUFFLÄCHE
APPAREIL DE COMMUTATION COMPOSITE POUR FORMER DES COMPOSANTS DE PNEU ET PROCÉDÉ DE FORMATION D'UNE BANDE DE ROULEMENT DE PNEUMATIQUE

(30) Priority: 30.06.2015 US 201562186434 P; 30.06.2015 US 201562186422 P
(43) Date of publication of application: 04.01.2017
(73) Proprietor: The Goodyear Tire & Rubber Company, Akron, Ohio 44316 (US)
(72) Inventor: DYRLUND, Christopher David, Canton, OH Ohio 44705 (US); BURG, Gary Robert, Massillon, OH Ohio 44646 (US); CHEN, Hongbing, Broadview Heights, OH Ohio 44147 (US)
(74) Representative: Kutsch, Bernd

(56) References cited:
- EP-A1- 2 634 430
- DE-A1-102011 084 110
- JP-A- 2004 216 725
- US-A1- 2009 173 419
- US-A1- 2014 053 961

## Description

### Field of the Invention

The invention relates in general to tire manufacturing, and more particularly to an apparatus and a method for forming tire components, particularly a tire tread.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a banbury mixer, which involves expensive capital expenditures. Furthermore, banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus it is desired to have an improved method which provides independent flow of two or more compounds from a single application head. More particularly, it is desired to be able to make a custom tire tread directly on the tire building machine in an efficient manner, reducing the need for multiple stations. It is further desired to provide a method and apparatus for forming a tread on a tire building drum using a single station or reduced number of stations while reducing the cycle time.

US-A-2009/173419 describes an apparatus in accordance with the preamble of claim 1.

DE-A-10 2011 084 110 describes an extruder device for manufacturing tires comprising several extruder cylinders extruding a rubber compound through different channels so that the extruded materials may be laminated one on the other at the exit of the extruder device.

### Summary of the Invention

The invention relates to an apparatus in accordance with claim 1 and to a method in accordance with claim 2.

Dependent claims refer to preferred embodiments of the invention.

An apparatus for applying a mixture of a first compound and a second compound is disclosed, the apparatus comprising a first extruder in fluid communication with a first gear pump for processing a first compound; and a second extruder in fluid communication with a second gear pump for processing a second compound. The outlet from the first gear pump is in fluid communication with a first channel of a nozzle, and the outlet from the second gear pump is in fluid communication with a second channel of the nozzle. The nozzle has a first and second passageway, wherein each passageway extends from the nozzle inlet to the nozzle outlet.

An apparatus for applying a mixture of a first compound and a second compound is disclosed. The apparatus comprises a first extruder for processing a first compound; and a second extruder for processing a second compound. The outlet from the first extruder is in fluid communication with a first channel of a housing, and the outlet from the second extruder is in fluid communication with a second channel of the housing. A gear pump is positioned in each channel. A nozzle is in fluid communication with an outlet of the first channel and an outlet of the second channel. The first channel and the second channel are preferably located adjacent each other. The nozzle has a first passageway in fluid communication with the first channel, and a second passageway in fluid communication with a second channel. Each passageway extends from the nozzle inlet to the nozzle outlet.

A method for forming a tread, preferably a multicap tread, on a green carcass is disclosed comprising the steps of: providing a tire building drum having a carcass thereon; applying a strip of a base compound continuously over one half of the carcass forming a first layer of base compound from the centerline of the carcass to a first lateral edge; applying a first tread cap compound over the base compound; applying a strip of a base compound continuously over the second half of the carcass forming a second layer of base compound from the centerline of the carcass to a second lateral edge; forming a chimney along an edge of the first tread cap compound; and applying a first tread cap compound over the second layer of the base compound.

A method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; applying a strip of a base compound with the nozzle over a first half of the carcass forming a first layer of base compound; applying a first tread cap compound over the base compound; applying a strip of a base compound continuously over the second half of the carcass forming a second layer of base compound from the centerline of the carcass to a second lateral edge; forming a chimney along an edge of the first tread cap compound; and applying a first tread cap compound over the second layer of the base compound.

A method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; extruding a base compound through the first extruder and gear pump and into the nozzle and then applying a strip of a base compound with the nozzle over a portion of the carcass forming a first layer of base compound; and extruding a first tread cap compound through the second extruder and second gear pump, and then applying the first tread cap compound with the nozzle.

A method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; extruding a first compound through the first extruder and then pumping the first compound through the first gear pump and nozzle, and then applying a strip of a first compound with the nozzle over a portion of the carcass forming a first layer of the first compound; and extruding a second compound through a second extruder and then pumping the second compound through the second gear pump and nozzle, and then applying a strip of the second compound with the nozzle over a portion of the carcass forming a layer of the second compound.

### Definitions

"Axial" and "axially" means the lines or directions that are parallel to the axis of rotation of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a schematic of a compound switching apparatus of the present invention.
FIG. 2 is a close up cross-sectional view of the compound switching apparatus of Fig. 1.
Fig. 3 is a cross-sectional view of the compound switching apparatus in use.
Figs. 4A-4D illustrate a tread being built on a tire building drum.
Figs. 5A-5D illustrate a second embodiment of a tread being built on a tire building drum.

### Detailed Description of Example Embodiments of the Invention

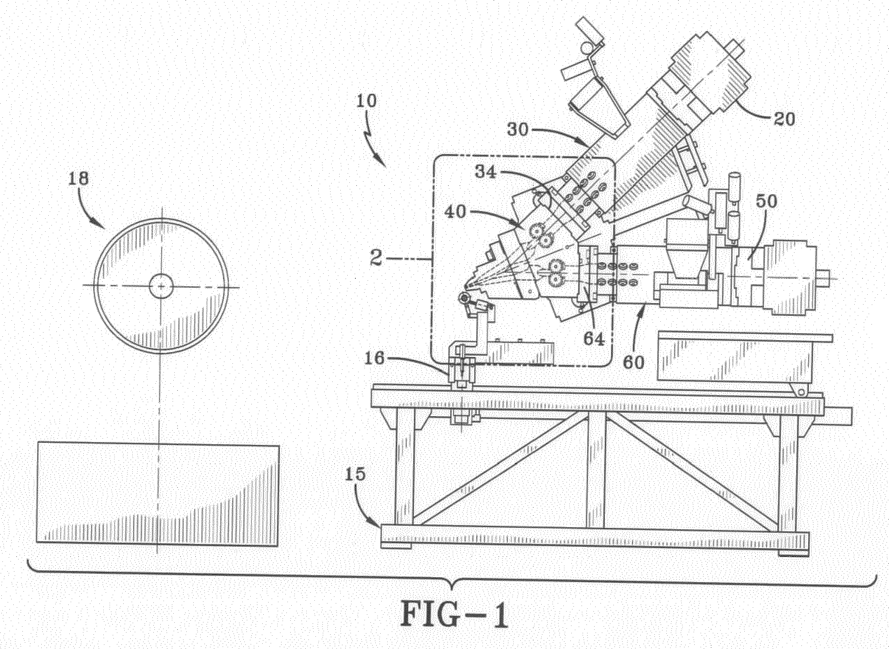

Figure 1 illustrates a first embodiment of a compound switching apparatus 10 suitable for use for making rubber compositions for tires or tire components such as the tread. The compound switching apparatus 10 is particularly suited for making a tread or small tire components having a varying composition, such as inserts, apexes and treads (including those for retreaded tires). The compound switching apparatus 10 may be provided directly at the tire or component building station for direct application of the rubber composition to a tire building drum or other component building apparatus.

The compound switching apparatus 10 is mounted upon a support frame 15. A translatable support bar 16 is mounted to the upper end of the support frame. Preferably, the compound switching apparatus 10 is mounted upon a translatable support bar 16 that can translate fore and aft in relation to a tire building machine 18.

As shown in Figure 1, the compound switching apparatus 10 includes a first extruder 30 and a second extruder 60, preferably arranged side by side as shown. The first extruder 30 has an inlet 32 for receiving a first rubber composition A as described in more detail, below. The first extruder 30 is driven by motor 20. The second extruder 60 has an inlet 62 for receiving a second rubber composition B as described in more detail, below. The second extruder 60 is driven by electrical motor 50. The first or second extruder 30, 60 may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has a length to diameter ratio (L/D) of 5, but may range from 3 to 5. A ring type, pin type or MCT type of extruder is preferred, but is not limited to same.

The first extruder inlet 32 receives a first compound A, examples of which are described in more detail, below. The first extruder 30 functions to warm up a first compound A to the temperature in the range of 80°C to 150°C, preferably 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a nozzle 80. The first gear pump 42 functions as a metering device and a pump and may have gears such as planetary gears, bevel gears or other gears.

The second extruder inlet 62 receives a second compound B, examples of which are described in more detail, below. The second extruder 60 functions to warm up the second compound B to the temperature in the range of 80°C to 150°C, preferably 90°C to 120°C, and to masticate the rubber composition as needed. The output end 64 of the second extruder 60 is connected to an inlet end 45 of a second gear pump 44. Compound B is thus extruded by the second extruder 60 and then pumped by the second gear pump 44, which functions as a metering device and a pump and may have gears such as planetary gears, bevel gears or other gears.

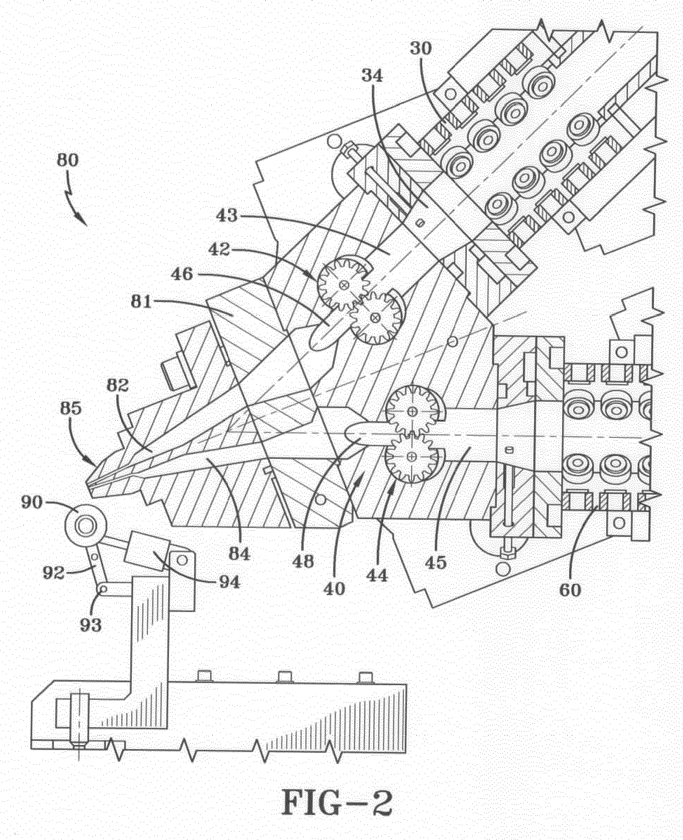

The first and second gear pumps 42, 44 are housed in a single housing 40 and are placed in close proximity to each other so that the outlet channels 46, 48 of the first and second gear pumps are also in close proximity, as shown in Figure 2. The outlet channels 46, 48 are fed into a nozzle assembly 80. The nozzle assembly 80 includes a dual passageway nozzle outlet 85 mounted on a mounting flange 81. The nozzle assembly 80 has two internal passageways 82, 84 throughout shown in Figure 2, that maintain separation of the rubber flow from each extruder 30,60 to the nozzle outlet 85.

A rotatable stitcher roller 90 is mounted adjacent the nozzle outlet 85 of the nozzle assembly 80. The stitcher roller 90 is pivotally mounted upon a support stand 92. An actuator 94 connected to the stitcher roller 90 pivots or rotates the support stand 92 about its end 93 when actuated.

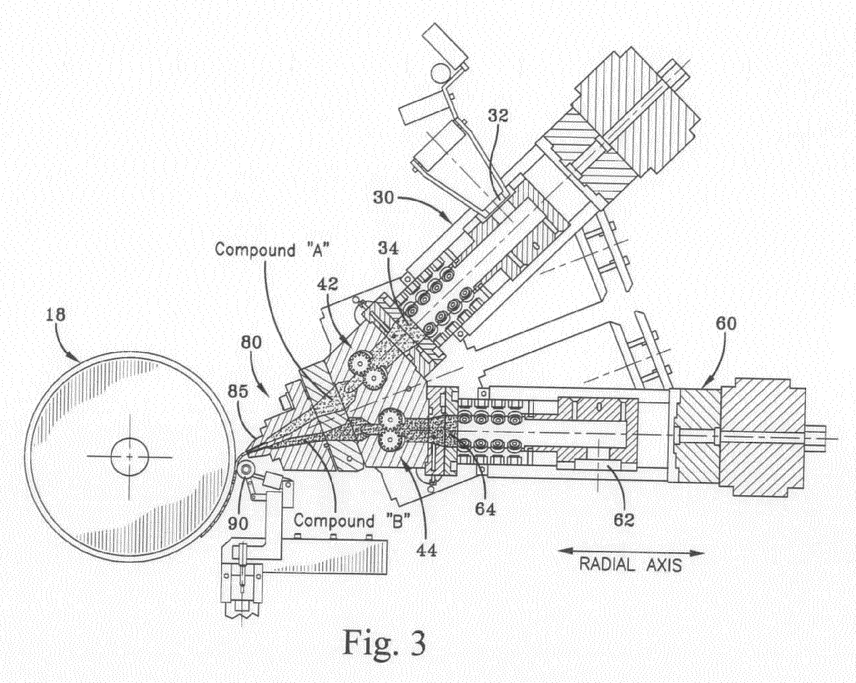

Figure 3 illustrates the compound switching apparatus 10 located adjacent a tire building drum. Figure 3 illustrates a first compound A being applied to the tire building drum. After compound A is applied, a second compound B can be applied to the tire building drum without the need for retracting the equipment or otherwise altering the equipment.

### Method Steps for Forming a Dual Tread

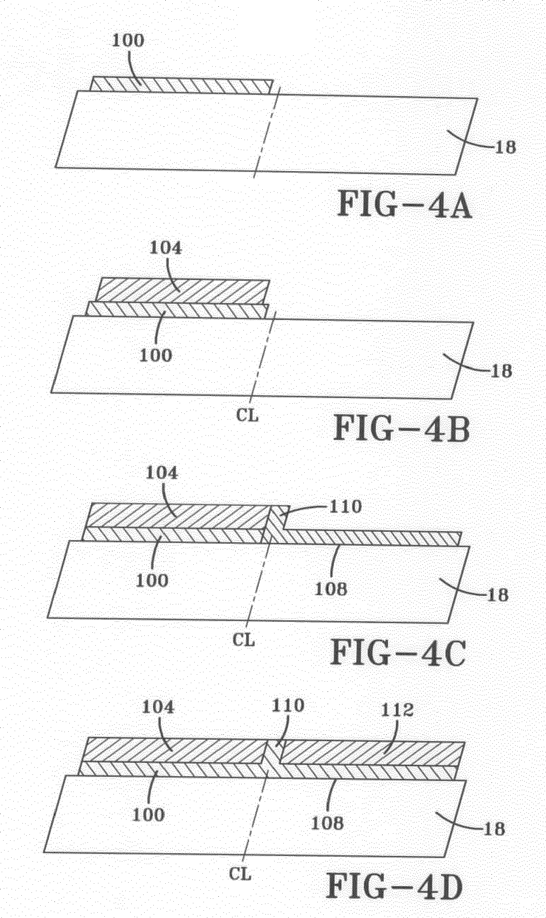

In a first embodiment, the following method steps are utilized in order to make a dual compound tread profile, wherein the steps described are for forming the tread directly onto a carcass mounted on a tire building drum. In this embodiment, the dual compound applicator apparatus 10 is translated on frame 15 by the translatable support bar 16 to move the nozzle 80 into engagement with the outer surface 19 of the tire building drum 18 as shown in Fig. 3. Next, a tread base compound is extruded through the second extruder 60 and second gear pump 44 located in the housing 40, and out the passageway 82 of nozzle 80. As the tire building drum is rotated, the tread base compound is applied directly onto the carcass mounted on the tire building drum via nozzle 80. The tread base compound is applied in thin strips in a continuous manner. Preferably, the strips have an axial width in a range of from 5 to 30 mm or from 10 to 25 mm. Typically, the strips are wound onto the carcass in a helical manner. Preferably, the strip is in initiated at the carcass centerline and helically wrapped to a first lateral end of the tire carcass as shown in Figure 4A, forming a first base layer 100. Next, a first tread cap compound is extruded through the first extruder 30 and first gear pump and then out through the nozzle. The first tread cap compound is applied directly over the base tread compound forming a first tread cap layer 104 as the tire building drum is rotated, resulting in one half of the carcass having a base layer 100 and a first tread cap layer 104 layered radially outward and over the base layer 100 as shown in Figure 4B.

Next, the base compound is applied over the carcass from the centerline to the second lateral end of the tire carcass forming a second base layer 108 as shown in Fig. 4C. A chimney 110 is formed from the base compound and is applied in the centerline area with multiple layers to build the chimney 110. Next, the first tread compound is extruded through the first extruder and first gear pump and then applied over the base layer 108 from the chimney 110 to the outer lateral edge to form a second tread cap layer 112, as shown in Fig. 4D.

### Method Steps for Forming a Multiple compound Tread with Base

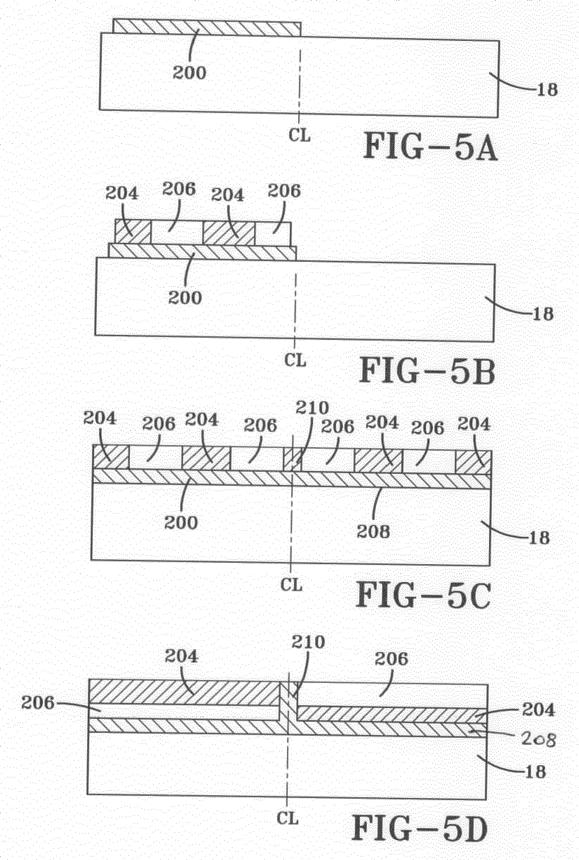

In a second embodiment, the following method steps are utilized in order to make a dual compound tread profile, wherein the steps described are for forming the tread directly onto a carcass mounted on a tire building drum. In this embodiment, there are two dual compound applicator apparati 10 used to form the multi compound tread. The first dual compound applicator 10 is used to apply the base compound and first cap compound. A second dual compound applicator 10 is used to apply the second cap compound and third cap compound. The nozzle 80 of the first compound applicator 10 is translated on frame 15 by the translatable support bar 16 to move the nozzle 80 into engagement with the outer surface 19 of the tire building drum 18. Next, a tread base compound is extruded through the second extruder 60 and second gear pump 44 located in the housing 40, and out the passageway 82 of nozzle 80. As the tire building drum is rotated, the tread base compound is applied directly onto the carcass mounted on the tire building drum via nozzle 80. The tread base compound is applied in thin strips in a continuous manner so that the strips are wound onto the carcass in a helical manner. Preferably, the strip is in initiated at the carcass centerline and helically wrapped to a first lateral end of the tire carcass as shown in Figure 5A, forming a first half of a first base layer 200. Next, a first tread cap compound is extruded through the first extruder 30 and first gear pump and out through the nozzle. The first tread cap compound is applied directly over the first base layer tread compound forming a first tread cap layer 204 as the tire building drum is rotated, resulting in one half of the carcass having a first base layer 200 and a first tread cap layer 204 layered radially outward and over the first base layer 200 as shown in Figure 5B. The first tread cap layer 204 may be alternated with a second tread cap layer 206 or a third tread cap layer as shown in Figure 5C or as desired. The second dual applicator is used to apply the second tread cap layer to the tread. Next, the second half of the first base layer 200 is applied shown as layer 208. The compound of the layer 208 may be the same as or different from the compound of the first half of the base layer 200. Also, a chimney 210 is formed from the layer 208 and is applied in the centerline area with multiple layers to build the chimney 210. Finally, alternating first tread cap layers 204 and second tread cap layers 206 are applied.

Figure 5D illustrates yet another embodiment of the tread configuration. As shown, the base compound is applied over the carcass forming a base layer 208 as shown. A chimney 210 is formed from the base compound and is applied in the centerline area with multiple layers to build the chimney 210. Next, a first tread compound is extruded through the first extruder and first gear pump and then applied over the base layer 208 from the chimney 210 to the outer lateral edge to form a first tread cap layer 206. A second compound is applied over the first tread cap layer 206 forming a radially outer layer 204 on the left hand side of the tread. On the right hand side of the tread, the configuration is reversed, with the second compound forming radially inner layer 204 and the first compound forming radially outer layer 206.

## Claims

1. An apparatus for forming a tire tread directly on a tire building drum by applying a first compound and a second compound, the apparatus comprising:
a first extruder (30) in fluid communication with a first gear pump (42) for processing a first compound (A); and
a second extruder (60) in fluid communication with a second gear pump (44) for processing a second compound (B);
wherein the outlet from the first gear pump (42) is in fluid communication with a first channel as a first internal passageway (82) of a nozzle (80), and the outlet from the second gear pump (44) is in fluid communication with a second channel as a second internal passageway (84) of the nozzle (80), the nozzle having a nozzle outlet (85);
and wherein the apparatus is configured for independently flowing the first compound and the second compound through the nozzle (80) and forming a tire tread directly on a tire building drum;
**characterized in that** the first and the second internal passageway (82, 84) extend throughout the nozzle (80) and maintain separation of the flow of the first and the second compound (A, B) through the nozzle (80) from the first and the second extruder (30, 60) to the nozzle outlet (85).

2. A method for forming a tire tread on a green tire carcass, the method comprising the steps of:
providing an apparatus in accordance with claim 1;
providing a tire building drum having a green carcass mounted thereon;
rotating the tire building drum;
extruding a base compound or a first compound through the first extruder (30) and the first gear pump (42) and into the nozzle (80) and then applying a strip of the base compound or of the first compound with the nozzle (80) over a portion of the green tire carcass forming a first layer (100) of the base compound or of the first compound; and
extruding a first tread cap compound or a second compound through the second extruder (60) and the second gear pump (44), and then applying the first tread cap compound or the second compound with the nozzle (80);
wherein the method further comprises independently flowing the first compound and the second compound through the nozzle (80).

3. The method of claim 2 further comprising the step of forming a chimney (110) with the base compound or with the first compound.

4. The method of claim 2 or 3 wherein the first compound or the base compound is pumped through the first gear pump (42) and the nozzle (80), wherein the second compound or the first tread compound is pumped through the second gear pump (44) and the nozzle (80), and wherein the first tread cap compound or the second compound is applied with the nozzle (80) as a strip over a portion of the carcass forming a layer of the second compound or of the first tread cap compound.

5. The method of claim 4 wherein the strip is continuously applied to the tire building drum as the compound being applied from the nozzle (80) is switched from the first compound or the base compound to the second compound or the first tread cap compound.

6. The method of at least one of the previous claims 2 to 5 wherein the first gear pump (42) and second gear pump (44) are mounted in a single housing (40).

7. The method of at least one of the previous claims 2 to 6, further comprising:
applying the strip of a first base compound with the nozzle over the first half or over the first portion of the green tire carcass forming the first layer (100) of base compound; and
applying the strip of the second base compound with the nozzle over the second half or over the second portion of the green tire carcass forming the second layer (108) of base compound.

## Patentansprüche

1. Vorrichtung zur Bildung einer Reifenlauffläche direkt auf einer Reifenbautrommel durch Anbringen einer ersten Mischung und einer zweiten Mischung, wobei die Vorrichtung umfasst:
einen ersten Extruder (30) in Fluidverbindung mit einer ersten Zahnradpumpe (42) zur Bearbeitung einer ersten Mischung (A); und
einen zweiten Extruder (60) in Fluidverbindung mit einer zweiten Zahnradpumpe (44) zur Bearbeitung einer zweiten Mischung (B);
wobei der Auslass von der ersten Zahnradpumpe (42) in Fluidverbindung mit einem ersten Kanal als ein erster innerer Durchgangsweg (82) einer Düse (80) steht und der Auslass von der zweiten Zahnradpumpe (44) in Fluidverbindung mit einem zweiten Kanal als ein zweiter innerer Durchgangsweg (84) der Düse (80) steht, wobei die Düse einen Düsenauslass (85) aufweist;
und wobei die Vorrichtung dafür ausgelegt ist, die erste Mischung und die zweite Mischung unabhängig durch die Düse (80) hindurchzuführen und eine Reifenlauffläche direkt auf einer Reifenaufbautrommel zu bilden;
**dadurch gekennzeichnet, dass** der erste und der zweite innere Durchgangsweg (82, 84) sich durch die Düse (80) hindurch erstrecken und die Trennung des Stroms der ersten und der zweiten Mischung (A, B) durch die Düse (80) von dem ersten und dem zweiten Extruder (30, 60) zu dem Düsenauslass (85) aufrechterhalten.

2. Verfahren zur Bildung einer Reifenlauffläche auf einem Reifenkarkassenrohling, wobei das Verfahren folgende Schritte umfasst:
Bereitstellen einer Vorrichtung gemäß Anspruch 1;
Bereitstellen einer Reifenaufbautrommel, worauf ein Karkassenrohling montiert ist;
Rotieren der Reifenaufbautrommel;
Extrudieren einer Basismischung oder einer ersten Mischung durch den ersten Extruder (30) und die erste Zahnradpumpe (42) und in die Düse (80) und dann Anbringen eines Streifens der Basismischung oder der ersten Mischung mit der Düse (80) über einen Teil des Reifenkarkassenrohlings, wodurch eine erste Schicht (100) der Basismischung oder der ersten Mischung gebildet wird; und
Extrudieren einer ersten Laufstreifenoberteilmischung oder einer zweiten Mischung durch den zweiten Extruder (60) und die zweite Zahnradpumpe (44) und dann Anbringen der ersten Laufstreifenoberteilmischung oder der zweiten Mischung mit der Düse (80);
wobei das Verfahren weiter das unabhängige Hindurchführen der ersten Mischung und der zweiten Mischung durch die Düse (80) umfasst.

3. Verfahren nach Anspruch 2, weiter den Schritt des Bildens eines Kamins (110) mit der Basismischung oder mit der ersten Mischung umfassend.

4. Verfahren nach Anspruch 2 oder 3, wobei die erste Mischung oder die Basismischung durch die erste Zahnradpumpe (42) und die Düse (80) hindurch gepumpt wird, wobei die zweite Mischung oder die erste Laufflächenmischung durch die zweite Zahnradpumpe (44) und die Düse (80) hindurch gepumpt wird, und wobei die erste Laufstreifenoberteilmischung oder die zweite Mischung mit der Düse (80) als Streifen über einem Teil der Karkasse angebracht wird, wodurch eine Schicht aus der zweiten Mischung oder aus der ersten Laufstreifenoberteilmischung gebildet wird.

5. Verfahren nach Anspruch 4, wobei der Streifen kontinuierlich auf der Reifenaufbautrommel angebracht wird, wenn die von der Düse (80) angebrachte Mischung von der ersten Mischung oder der Basismischung zu der zweiten Mischung oder der ersten Laufstreifenoberteilmischung umgeschaltet wird.

6. Verfahren nach mindestens einem der vorhergehenden Ansprüche 2 bis 5, wobei die erste Zahnradpumpe (42) und die zweite Zahnradpumpe (44) in einem einzigen Gehäuse (40) montiert sind.

7. Verfahren nach mindestens einem der vorhergehenden Ansprüche 2 bis 6, weiter umfassend:
Anbringen des Streifens aus einer ersten Basismischung mit der Düse über der ersten Hälfte oder über dem ersten Teil des Reifenkarkassenrohlings, wodurch die erste Schicht (100) von Basismischung gebildet wird; und
Anbringen des Streifens aus der zweiten Basismischung mit der Düse über der ersten Hälfte oder über dem zweiten Teil des Reifenkarkassenrohlings, wodurch die zweite Schicht (108) von Basismischung gebildet wird.

## Revendications

1. Appareil pour former une bande de roulement de bandage pneumatique directement sur un tambour de confection de bandage pneumatique via l'application d'un premier composé et d'un second composé, l'appareil comprenant :
une première extrudeuse (30) mise en communication par fluide avec une première pompe à engrenages (42) pour le traitement d'un premier composé (A) ; et
une seconde extrudeuse (60) mise en communication par fluide avec une seconde pompe à engrenages (44) pour le traitement d'un second composé (B) ;
dans lequel la sortie à partir de la première pompe à engrenages (42) est mise en communication par fluide avec un premier canal sous la forme d'un premier passage interne (82) d'une buse (80) et la sortie à partir de la seconde pompe à engrenages (44) est mise en communication par fluide avec un second canal sous la forme d'un second passage interne (84) de la buse (80), la buse possédant une sortie de buse (85) ;
et dans lequel l'appareil est configuré pour l'écoulement du premier composé et celui du second composé de manière indépendante à travers la buse (80) et pour la formation d'une bande de roulement de bandage pneumatique directement sur un tambour de confection de bandage pneumatique ;
**caractérisé en ce que** le premier et le second passage interne (82, 84) s'étendent à travers la buse (80) et maintiennent la séparation de l'écoulement du premier et du second composé à travers la buse (80) à partir de la première et de la seconde extrudeuse (30, 60) en direction de la sortie de buse (85).

2. Procédé pour la formation d'une bande de roulement de bandage pneumatique sur une carcasse de bandage pneumatique non vulcanisée, le procédé comprenant les étapes consistant à :
procurer un appareil selon la revendication 1 ;
procurer un tambour de confection de bandage pneumatique sur lequel est montée une carcasse non vulcanisée ;
faire tourner le tambour de confection de bandage pneumatique ;
extruder un composé de base ou un premier composé à travers la première extrudeuse (30) et la première pompe à engrenages (42) et jusque dans la buse (80) et appliquer ensuite une bande du composé de base ou du premier composé avec la buse (80) sur une portion de la carcasse de bandage pneumatique non vulcanisée pour obtenir une première couche (100) du composé de base ou du premier composé ; et
extruder un premier composé de chape de bande de roulement ou un second composé à travers la seconde extrudeuse (60) et la seconde pompe à engrenages (44) et appliquer ensuite le premier composé de chape de bande de roulement ou le second composé avec la buse (80)
dans lequel le procédé comprend en outre l'écoulement du premier composé et celui du second composé de manière indépendante à travers la buse (80).

3. Procédé selon la revendication 2, comprenant en outre l'étape consistant à former une cheminée (110) avec le composé de base ou avec le premier composé.

4. Procédé selon la revendication 2 ou 3, dans lequel le premier composé ou le composé de base est pompé à travers la première pompe à engrenages (42) et la buse (80) ; dans lequel le second composé ou le premier composé de bande de roulement est pompé à travers la seconde pompe à engrenages (44) et la buse (80) ; et dans lequel le premier composé de chape de bande de roulement ou le second composé est appliqué avec la buse (80) sous la forme d'une bande sur une portion de la carcasse pour obtenir une couche du second composé ou du premier composé de chape de bande de roulement.

5. Procédé selon la revendication 4, dans lequel la bande est appliquée en continu sur le tambour de confection de bandage pneumatique étant donné que le composé en train d'être appliqué à partir de la buse (80) est soumis à une commutation pour passer du premier composé ou du composé de base au second composé ou au premier composé de chape de bande de roulement.

6. Procédé selon au moins une des revendications précédentes 2 à 5, dans lequel la première pompe à engrenages (42) et la seconde pompe à engrenages (44) sont montées dans un logement unique (40).

7. Procédé selon au moins une des revendications précédentes 2 à 6, comprenant en outre le fait de :
appliquer la bande d'un premier composé de base avec la buse par-dessus la première moitié ou par-dessus la première portion de la carcasse de bandage pneumatique non vulcanisée pour obtenir la première couche (100) du composé de base ; et
appliquer la bande du second composé de base avec la buse par-dessus la seconde moitié ou par-dessus la seconde portion de la carcasse de bandage pneumatique non vulcanisée pour obtenir la seconde couche (108) du composé de base.
